(19) Europäisches Patentamt
European Patent Office
Office européen des brevets

(11) EP 0 479 068 B1

(12) **EUROPÄISCHE PATENTSCHRIFT**

(45) Veröffentlichungstag und Bekanntmachung des Hinweises auf die Patenterteilung:
**05.03.1997 Patentblatt 1997/10**

(51) Int Cl.6: **C09B 53/00**, B41M 5/38

(21) Anmeldenummer: **91116031.5**

(22) Anmeldetag: **20.09.1991**

(54) **Chinolinmethinfarbstoffe sowie ein Verfahren zu ihrer thermischen Übertragung**

Quinoline methin dyes and process for their thermal transfer

Colorants de type quinoléine méthine et procédé pour leur transformation thermique

(84) Benannte Vertragsstaaten:
**CH DE FR GB IT LI**

(30) Priorität: **04.10.1990 DE 4031254**

(43) Veröffentlichungstag der Anmeldung:
**08.04.1992 Patentblatt 1992/15**

(73) Patentinhaber: **BASF Aktiengesellschaft
67063 Ludwigshafen (DE)**

(72) Erfinder:
- **Sens, Ruediger, Dr.
W-6800 Mannheim 1 (DE)**
- **Etzbach, Karl-Heinz, Dr.
W-6710 Frankenthal (DE)**

(56) Entgegenhaltungen:

- **JOURNAL OF THE CHEMICAL SOCIETY, PERKIN TRANSACTIONS 1. Bd. 2, Nr. 8, LETCHWORTH GB Seiten 1469 - 1472; KUBO Y., SASAKI K., YOSHIDA K.: 'Synthesis of novel near-infrared absorbing metal complexdyes with indoanilin-type ligands'**
- **PATENT ABSTRACTS OF JAPAN vol. 14, no. 265 (C-726)(4208) 8. Juni 1990 & JP-A-2 076 884 ( YOSHIHARU KUBO ) 16. März 1990**
- **PATENT ABSTRACTS OF JAPAN vol. 14, no. 555 (C-786)(4498) 10. Dezember 1990 &**
- **JP-A-2 238 059 ( YOSHIHARU KUBO ) 20. September 1990**
- **JOURNAL OF THE CHEMICAL SOCIETY, CHEMICAL COMMUNICATIONS. Bd. 2, Nr. 18, 15. September 1990, LETCHWORTH GB Seiten 1253 - 1254; KUBO Y., YASUOKA H., YOSHIDA K.: 'New Indoaniline-type Near-infrared Colour Former'**
- **JOURNAL OF THE CHEMICAL SOCIETY, CHEMICAL COMMUNICATIONS. Nr. 22, 15. November 1988, LETCHWORTH GB Seiten 1457 - 1458; KUBO Y., KATAOKA H., YOSHIDA K.: 'New bis[3-(4'dialkylaminophenylimino)pyrido[2,3-a] phenothiazi ne]nickel(ii)Complexes with Near-infrared Absorptions'**
- **DERWENT JAPANESE PATENTS Derwent Publications Ltd., Woche 31-10-199006-11-1990, Sektion: Printing, Coating , Photographic Chemistry, Seite 29 & JP-A-2-270592 [MITSUBISHI CASEI CORP.] 05-11-1990**
- **DERWENT JAPANESE PATENTS Derwent Publications Ltd., week 10-05-198916-05-1989, Sektion: Printing, Coating, Photographic Chemistry, Seite 26 & JP-A-1-121851 (Konica Corp.) 15-05-1989**
- **DERWENT JAPANESE PATENTS Derwent Publications Ltd., Woche 26-09-199002-10-1990,**
- **Sektion: Printing, Coating, Photographic Chemistry, Seite 2 & JP-A-2-241786 [MITSUBISHI CASEI CORP.] 26-09-1990**
- **PATENT ABSTRACTS OF JAPAN vol. 10, no. 167 (M-488)(2223) 13. Juni 1986 & JP-A- 61 019 396 ( MITSUBISHI KASEI KOGYO K. K. ) 28. Januar 1986**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 479 068 B1

## Beschreibung

Die vorliegende Erfindung betrifft neue Chinolinmethinfarbstoffe der Formel I

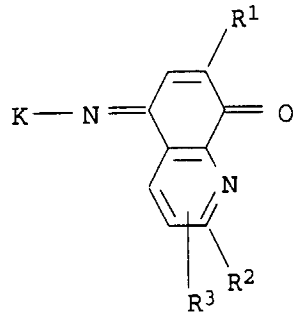

(I),

in der

$R^1$ Fluor, Chlor oder Brom,

$R^2$ Wasserstoff oder $C_1$-$C_4$-Alkyl,

$R^3$ Wasserstoff, Fluor, Chlor oder Brom und

K einen Rest der Formel

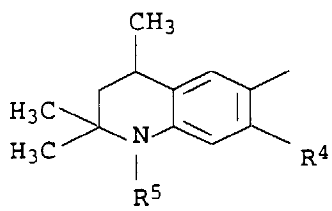

(II)

bedeuten, in der

$R^4$ für Wasserstoff, Methyl, Methoxy, $C_1$-$C_4$-Alkylsulfonylamino, $C_1$-$C_4$-Mono- oder -Dialkylaminosulfonylamino oder den Rest -$NHCOR^6$ oder -$NHCO_2R^6$, wobei $R^6$ die Bedeutung von Phenyl, Benzyl, Tolyl oder $C_1$-$C_8$-Alkyl, das gegebenenfalls durch ein oder zwei Sauerstoffatome in Etherfunktion unterbrochen ist, besitzt, und

$R^5$ für Wasserstoff, $C_1$-$C_8$-Alkyl, das gegebenenfalls substituiert ist und durch ein oder zwei Sauerstoffatome in Etherfunktion unterbrochen sein kann, oder $C_5$-$C_7$-Cycloalkyl stehen,

sowie ein Verfahren zu ihrer thermischen Übertragung.

Aus der JP-A-19 396/1986 sind Chinolinmethinfarbstoffe bekannt, in der die Ringposition 7 des Chinolinrings unsubstituiert ist.

In der JP-A-76 884/1990, JP-A-238 059/1990, JP-A-241 786/1990 sowie in J. Chem. Soc. Perkin I, Seiten 1469 bis 1472, 1989, und J. Chem. Soc. Chem. Comm., Seiten 1457 und 1458, 1988, sind Chinolinazamethinfarbstoffe beschrieben, die einen Phenylring an der Azamethingruppe aufweisen.

Weiterhin beschreiben die JP-A-84 388/1990 sowie die US-A-4 769 360 Naphthochinoniminfarbstoffe, die in ortho-Position zur Carbonylgruppe ein Chlor- oder Iodatom aufweisen.

Es hat sich jedoch gezeigt, dar die Farbstoffe des Standes der Technik noch Mängel in ihren anwendungstechnischen Eigenschaften aufweisen.

Aufgabe der vorliegenden Erfindung war es daher, neue Chinolinmethinfarbstoffe bereitzustellen, die sich in vorteilhafter Weise zur thermischen Übertragung eignen.

Demgemäß wurden die eingangs näher bezeichneten Chinolinmethinfarbstoffe der Formel I gefunden.

Alle in der obengenannten Formel I auftretenden Alkylgruppen können sowohl geradkettig als auch verzweigt sein.

Wenn in der obengenannten Formel I substituierte Alkylgruppen auftreten, so können als Substituenten z.B. Cyano, Phenyl, Tolyl, $C_1$-$C_6$-Alkanoyloxy, $C_1$-$C_4$-Alkoxycarbonyl oder $C_1$-$C_4$-Alkoxycarbonyloxy, wobei im letzten Fall die Alkoxygruppe durch Phenyl oder $C_1$-$C_4$-Alkoxy substituiert sein kann, in Betracht kommen.

Geeignete Reste $R^2$, $R^5$ und $R^6$ sind z.B. Methyl, Ethyl, Propyl, Isopropyl, Butyl, Isobutyl oder sec-Butyl.

Reste $R^5$ und $R^6$ sind weiterhin z.B. Pentyl, Isopentyl, Neopentyl, tert-Pentyl, Hexyl, 2-Methylpentyl, Heptyl, Octyl, 2-Ethylhexyl, 2-Methoxyethyl, 2- oder 3-Methoxypropyl, 2-Ethoxyethyl, 2- oder 3-Ethoxypropyl, 2-Propoxyethyl, 2- oder 3-Propoxypropyl,

2-Butoxyethyl, 2- oder 3-Butoxypropyl, 3,6-Dioxaheptyl oder 3,6-Dioxaoctyl.

Reste $R^6$ sind weiterhin z.B. 2-Cyanoethyl, 2- oder 3-Cyanopropyl, 2-Acetyloxyethyl, 2- oder 3-Acetyloxypropyl, 2-Isobutyryloxyethyl, 2- oder 3-Isobutyryloxypropyl, 2-Methoxycarbonylethyl, 2-oder 3-Methoxycarbonylpropyl, 2-Ethoxycarbonylethyl, 2- oder 3-Ethoxycarbonylpropyl, 2-Methoxycarbonyloxyethyl, 2- oder 3-Ethoxycarbonyloxypropyl, 2-Ethoxycarbonyloxyethyl, 2- oder 3-Ethoxycarbonyloxypropyl, 2-Propoxycarbonyloxyethyl, 2- oder 3-Propoxycarbonyloxypropyl, 2-Butoxycarbonyloxyethyl, 2- oder 3-Butoxycarbonyloxypropyl, 2-(2-Phenylethoxycarbonyloxy)ethyl, 2- oder 3-(2-Phenylethoxycarbonyloxy)propyl, 2-(2-Ethoxyethoxycarbonyloxy)ethyl 2- oder 3-(2-Ethoxyethoxycarbonyloxy)propyl, Benzyl, 2-Methylbenzyl, 1- oder 2-Phenylethyl, Cyclopentyl-, Cyclohexyl oder Cycloheptyl.

Reste $R^4$ sind z.B. Methylsulfonylamino, Ethylsulfonylamino, Propylsulfonylamino, Isopropylsulfonylamino, Butylsulfonylamino, Mono- oder Dimethylaminosulfonylamino, Mono- oder Diethylaminosulfonylamino, Mono- oder Dipropylaminosulfonylamino, Mono- oder Diisopropylaminosulfonylamino, Mono- oder Dibutylaminosulfonylamino oder (N-Methyl-N-ethylaminosulfonyl)amino.

Bevorzugt sind Chinolinmethinfarbstoffe der Formel I, in der

$R^1$ Chlor

$R^2$ Wasserstoff oder Methyl und

$R^3$ Wasserstoff und bedeuten.

Hervorzuheben sind Chinolinmethinfarbstoffe der Formel I, in der $R^4$ den Rest $-NHCOR^6$ oder $NHCO_2R^6$ bedeutet, wobei $R^6$ jeweils die obengenannte Bedeutung besitzt.

Besonders bevorzugt sind Chinolinmethinfarbstoffe der Formel I, in der

$R^1$ Chlor

$R^2$ Wasserstoff oder Methyl,

$R^3$ Wasserstoff,

$R^4$ Wasserstoff, Methyl oder Acetylamino und

$R^5$ Wasserstoff, Benzyl oder gegebenenfalls substituierteS $C_1$-$C_8$-Alkyl bedeuten.

Die erfindungsgemäßen Chinolinmethinfarbstoffe der Formel I können nach an sich bekannten Methoden hergestellt werden.

BeispielsweiSe kann man eine Nitroseverbindung der Formel III

$$K\text{-}N{=}O \qquad (III),$$

in der K die obengenannte Bedeutung besitzt, mit einem Chinolin der Formel IV

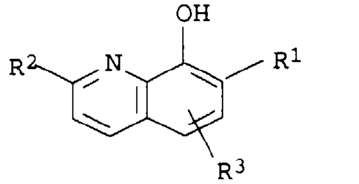

(IV),

in der $R^1$, $R^2$ und $R^3$ jeweils die obengenannte Bedeutung besitzen, kondensieren (siehe z.B. DE-A-3 716 656).

Es ist auch möglich, Amine der Formel V

$$K\text{-}NH_2 \qquad (V),$$

in der K jeweils die obengenannte Bedeutung besitzt, mit den Chinolinen der Formel IV oxidativ zu kuppeln (siehe z. B. US-A-4 695 287).

Eine weitere Aufgabe der vorliegenden Erfindung war es, ein neues Verfahren für den thermischen Transfer von Farbstoffen bereitzustellen.

Beim Thermotransferdruckverfahren wird ein Transferblatt, das einen thermisch transferierbaren Farbstoff in einem oder mehreren Bindemitteln, gegebenenfallS zusammen mit geeigneten Hilfsmitteln, auf einem Träger enthält, mit einer Energiequelle, z.B. mit einem Heizkopf oder einem Laser, durch kurze Heizimpulse (Dauer: Bruchteile einer Sekunde) von der Rückseite her erhitzt, wodurch der Farbstoff aus dem Transferblatt migriert und in die Oberflächenbeschichtung eines Aufnahmemediums hineindiffundiert. Der wesentliche Vorteil dieses Verfahrens besteht darin, daß die Steuerung der zu übertragenden Farbstoffmenge (und damit die Farbabstufung) durch Einstellung der von der Energiequelle abzugebenden Energie leicht möglich ist.

Allgemein wird die Farbaufzeichnung unter Verwendung der drei subtraktiven Grundfarben Gelb, Magenta, Cyan (und gegebenenfalls Schwarz) durchgeführt.

Um eine optimale Farbaufzeichnung zu ermöglichen, müssen die Farbstoffe folgende Eigenschaften besitzen:

- leichte thermische Transferierbarkeit,
- geringe Migration innerhalb oder aus der Oberflächenbeschichtung des Aufnahmemediums bei Raumtemperatur,
- hohe thermische und photochemische Stabilität sowie Resistenz gegen Feuchtigkeit und chemische Stoffe,
- für subtraktive Farbmischung die geeigneten Farbtöne aufweisen,
- einen hohen molaren Absorptionskoeffizienten aufweisen,
- bei Lagerung des Transferblattes nicht auskristallisieren.

Diese Forderungen sind erfahrungsgemäß gleichzeitig sehr schwierig zu erfüllen.

Daher entsprechen die meisten der bekannten, für den thermischen Transferdruck verwendeten Farbstoffe nicht dem geforderten Anforderungsprofil.

Es wurde nun gefunden, daß die Übertragung von Chinolinmethinfarbstoffen von einem Träger auf ein mit Kunststoff beschichtetes Papier durch Diffusion oder Sublimation mit Hilfe einer Energiequelle vorteilhaft gelingt, wenn man einen Träger verwendet, auf dem sich ein oder mehrere Chinolinmethinfarbstoffe der obengenannten Formel I befinden.

Im Vergleich zu den bei den bekannten Verfahren verwendeten Farbstoffen zeichnen sich die im erfindungsgemäßen Verfahren übertragenen Farbstoffe der Formel I im allgemeinen durch verbesserte Migrationseigenschaften im Aufnahmemedium bei Raumtemperatur, leichtere thermische Transferierbarkeit, höhere thermische und photochemische Stabilität, leichtere technische Zugänglichkeit, bessere Resistenz gegen Feuchtigkeit und chemische Stoffe, höhere Farbstärke, bessere Löslichkeit oder bessere Eignung für die subtraktive Farbmischung (höhere Farbtonreinheit, günstigere Form der Absorptionsbande) aus. Außerdem eignen sie sich besonders vorteilhaft für Farbstoffmischungen mit Triazolopyridinfarbstoffen, wie sie in der älteren Patentanmeldung EP-A-416 434 beschrieben sind. Dies gilt hauptsächlich im Hinblick auf bessere Transferierbarkeit, höhere Farbbandstabilität, höhere Lichtechtheit, bessere Verteilung der Transferfarbstoffe im Aufnahmemedium und insbesondere für die Herstellung von besseren Schwarzmischungen.

Zur Herstellung der für das erfindungsgemäße Verfahren benötigten Farbstoffträger werden die Farbstoffe in einem geeigneten organischen Lösungsmittel oder in Mischungen von Lösungsmitteln mit einem oder mehreren Bindemitteln, gegebenenfalls unter Zugabe von Hilfsmitteln, zu einer Druckfarbe verarbeitet. Diese enthält den Farbstoff vorzugsweise in molekulardispers gelöster Form. Die Druckfarbe kann mittels einer Rakel auf den inerten Träger aufgetragen und die Färbung an der Luft getrocknet werden.

Geeignete organische Lösungsmittel für die Farbstoffe I sind z.B. solche, in denen die Löslichkeit der Farbstoffe I bei einer Temperatur von 20°C größer als 1 Gew.%, vorzugsweise größer als 5 Gew.% ist.

Beispielhaft seien Ethanol, Propanol, Isobutanol, Tetrahydrofuran, Methylenchlorid, Methylethylketon, Cyclopentanon, Cyclohexanon, Toluol, Chlorbenzol oder deren Mischungen genannt.

Als Bindemittel kommen alle Resins oder Polymermaterialien in Betracht, die in organischen Lösungsmitteln löslich sind und den Farbstoff an den inerten Träger abriebfest zu binden vermögen. Dabei werden solche Bindemittel bevorzugt, die den Farbstoff nach Trocknung der Druckfarbe an der Luft in Form eines klaren, transparenten Films aufnehmen, ohne daß dabei eine sichtbare Auskristallisation des Farbstoffes auftritt.

Beispiele für solche Bindemittel sind Cellulosederivate, z.B. Methylcellulose, Ethylcellulose, Ethylhydroxyethylcellulose, Hydroxypropylcellulose, Celluloseacetat oder Celluloseacetobutyrat, Stärke, Alginate, Alkydresins, Vinylresins, Polyvinylalkohol, Polyvinylacetat, Polyvinylbutyrat oder Polyvinylpyrrolidon. Weiterhin kommen Polymere und Copolymere von Acrylaten oder deren Derivate, wie Polyacrylsäure, Polymethylmethacrylat oder Styrolacrylatcopolymere, Polyesterresins, Polyamidresins, Polyurethanresins oder natürliche CH-Resins, wie Gummi Arabicum, als Bindemittel in Betracht. Weitere geeignete Bindemittel sind z.B. in der DE-A-3 524 519 beschrieben.

Bevorzugte Bindemittel sind Ethylcellulose, Ethylhydroxyethylcellulose, Polyvinylbutyrat oder Polyvinylacetat.

Das Gewichtsverhältnis Bindemittel:Farbstoff beträgt im allgemeinen 1:1 bis 10:1.

Als Hilfsmittel kommen z.B. Trennmittel in Betracht, wie sie in der EP-A-227 092, EP-A-192 435 oder den dort zitierten Patentanmeldungen genannt sind. Darüber hinaus sind besonders organische Additive zu nennen, welche das Auskristallisieren der Transferfarbstoffe bei Lagerung oder beim Erhitzen des Farbbandes verhindern, z.B. Cholesterin oder Vanillin.

Inerte Träger sind z.B. Seiden-, Lösch- oder Pergaminpapier oder Kunststoffolien mit guter Wärmebeständigkeit, z.B. gegebenenfalls metallbeschichteter Polyester, Polyamid oder Polyimid. Der inerte Träger wird auf der dem Thermokopf zugewandten Seite gegebenenfalls zusätzlich mit einer Gleitmittelschicht (Slipping layer) beschichtet, um ein Verkleben der Energiequelle, insbesondere des Thermokopfes, mit dem Trägermaterial zu verhindern. Geeignete Gleitmittel werden z.B. in der EP-A-216 483 oder EP-A-227 095 beschrieben. Die Dicke des Farbstoff-Trägers beträgt im allgemeinen 3 bis 30 μm, vorzugsweise 5 bis 10 μm.

Als Farbstoffnehmerschicht kommen prinzipiell alle temperaturstabilen Kunststoffschichten mit Affinität zu den zu transferierenden Farbstoffen in Betracht, z.B. modifizierte Polycarbonate oder Polyester. Geeignete Rezepturen für die Nehmerschichtzusammensetzung werden z.B. in der EP-A-227 094, EP-A-133 012, EP-A-133 011, EP-A-111 004, JP-A-199 997/1986, JP-A-283 595/1986, JP-A-237 694/1986 oder JP-A-127 392/1986 ausführlich beschrieben.

Die Übertragung erfolgt mittels einer Energiequelle, z.B. mittels eines Lasers oder eines Thermokopfes, wobei der letztere auf eine Temperatur von $\geq$ 300°C aufheizbar sein muß, damit der Farbstofftransfer im Zeitbereich t: $0 < t < 15$ msec erfolgen kann. Dabei migriert der Farbstoff aus dem Transferblatt und diffundiert in die Oberflächenbeschichtung des Aufnahmemediums.

Die erfindungsgemäßen Farbstoffe eignen sich weiterhin vorteilhaft zum Färben von synthetischen Materialien, z.B. von Polyestern, Polyamiden oder Polycarbonaten. Insbesondere zu nennen sind textile Gewebe aus Polyester, Polyamid oder Polyester-Baumwolle-Mischgewebe.

Die neuen Farbstoffe eignen sich weiterhin vorteilhaft für die Herstellung von Farbfiltern, wie sie z.B. in der EP-A-399 473 beschrieben sind.

Schließlich können sie auch vorteilhaft für die Herstellung von Tonern für die Elektrophotographie verwendet werden.

Die folgenden Beispiele sollen die Erfindung näher erläutern. Angaben über Prozente beziehen sich, sofern nicht anders vermerkt, auf das Gewicht.

Herstellung der Farbstoffe

<u>Beispiel 1 (nicht beansprucht)</u>

10 g N,N-Diethyl-p-phenylendiamin-hydrochlorid und 11,4 g 5,7-Dichlor-8-hydroxy-2-methylchinolin wurden in 300 ml Ethanol vorgelegt. Anschließend wurde unter Rühren bei Raumtemperatur eine Lösung von 8,5 g Silbernitrat in 38 ml Wasser zugetropft. Nach beendeter Zugabe wurden 38 ml 25 gew.%ige Ammoniumhydroxidlösung und danach eine Lösung von 21,3 g Silbernitrat in 25 ml Wasser zur Reaktionslösung zugegeben. Nach dreistündigem Rühren bei 30 bis 40°C wurde abgesaugt im Trockenschrank bei Raumtemperatur unter vermindertem Druck getrocknet und anschließend über eine Säule chromatographiert (Kieselgel/Essigester). Die Ausbeute an spektral hochreinem Farbstoff der Formel

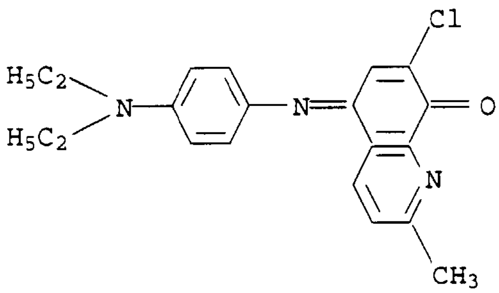

(I),

betrug 8,6 g. Der Farbstoff besitzt einen Schmelzpunkt von 145°C und ein Absorptionsmaximum (gemessen in Tetrahydrofuran) von 616 nm.

In analoger Weise wurden die in der folgenden Tabelle 1 sowie die in den folgenden Transferexperimenten näher beschriebenen Farbstoffe erhalten.

Tabelle 1

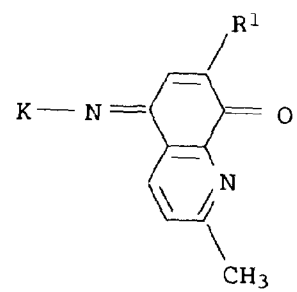

| Beispiel Nr. | K | $R^1$ | $R^5$ | $R^4$ | $\lambda_{max}$ [nm] [a] | $R_f$-Wert |
|---|---|---|---|---|---|---|
| 2 | II | Cl | $CH_3$ | $CH_3$ | 648 | 0,45 [b] |
| 3 | II | Br | $CH_3$ | $CH_3$ | 650 | 0,47 [b] |
| 4 | II | Cl | $C_2H_5$ | H | 634 | 0,40 [b] |
| 5 | II | Br | $C_2H_5$ | H | 637 | 0,33 [b] |
| 6 | II | Cl | $C_2H_4CO_2C_2H_5$ | H | 620 | 0,30 [b] |
| 7 | II | Br | $C_2H_4CO_2C_2H_5$ | H | 622 | 0,34 [b] |

[a] gemessen in Tetrahydrofuran
[b] Laufmittel: Toluol/Essigester 3:2 v/v

Transfer der Farbstoffe

Um das Transferverhalten der Farbstoffe quantitativ und in einfacher Weise prüfen zu können, wurde der Thermotransfer mit großflächigen Heizbacken durchgeführt, wobei die Transfertemperatur im Bereich 70°C < T < 20°C variiert und die Transferzeit auf 2 Minuten festgelegt wurde.

α) Allgemeines Rezept für die Beschichtung der Träger mit Farbstoff:

1 g Bindemittel wurde in 8 ml Toluol/Ethanol (8:2 v/v) bei 40 bis 50 °C gelöst. Dazu wurde eine Lösung aus 0,25 g Farbstoff in 5 ml Tetrahydrofuran eingerührt und gegebenenfalls von unlöslichem Rückstand abfiltriert. Die so erhaltene Druckpaste wurde mit einer 80 µm Rakel auf eine Polyesterfolie (Dicke: 6 bis 10 µm) abgezogen und mit einem Fön getrocknet.

β) Prüfung auf thermische Transferierbarkeit

Die verwendeten Farbstoffe wurden in der folgenden Weise geprüft:

Die den zu prüfenden Farbstoff in der Beschichtungsmasse (Vorderseite) enthaltende Polyesterfolie (Geber) wurde mit der Vorderseite auf kommerziell erhältliches (unten näher bezeichnetes) Papier (Nehmer) gelegt und aufgedrückt. Geber/Nehmer wurden dann mit Aluminiumfolie umwickelt und zwischen zwei beheizten Platten bei verschiedener Temperatur T (im Temperaturintervall 70°C < T < 120°C) erhitzt. Die in die glänzende Kunststoffschicht des Nehmers diffundierte Farbstoffmenge ist proportional der optischen Dichte (= Extinktion A). Letztere wurde photometrisch bestimmt. Trägt man den Logarithmus der im Temperaturintervall zwischen 80 und 110°C gemessenen Extinktion A der angefärbten Nehmerpapiere gegen die zugehörige reziproke absolute Temperatur auf, so erhält man Geraden, aus deren Steigung die Aktivierungsenergie $\Delta E_T$ für das Transferexperiment berechnet wird:

$$\Delta E_T = 2{,}3 \cdot R \cdot \frac{\Delta \log A}{\Delta[\frac{1}{T}]}$$

Zur vollständigen Charakterisierung wurde aus den Auftragungen zusätzlich die Temperatur T* [°C] entnommen, bei der die Extinktion A der angefärbten Nehmerpapiere den Wert 1 erreicht.

Die in der folgenden Tabelle 2 aufgeführten Farbstoffe wurden nach α) verarbeitet und die erhaltenen, mit Farbstoff beschichteten Träger nach β) auf das Transferverhalten geprüft. In der Tabelle sind jeweils die Thermotransferparameter T* und $\Delta E_T$, die Absorptionsmaxima $\lambda_{max}$, gemessen in Tetrahydrofuran, und die verwendeten Bindemittel aufgeführt.

Dabei gelten folgende Abkürzungen:

B = Bindemittel
EC =Ethylcellulose
v = Vylon® 290 (Firma Toyobo)

Tabelle 2

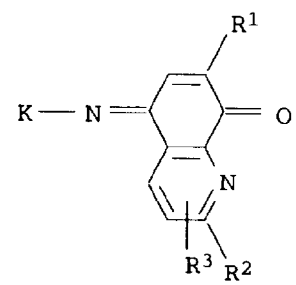

| Beisp. Nr. | K | $R^1$ | $R^2$ | $R^5$ | $R^4$ | $R^3$ | B | $\lambda_{max}$ [nm] | T* [°C] | $\Delta E_T$ [kcal/mol] |
|---|---|---|---|---|---|---|---|---|---|---|
| 8 | II | Cl | $CH_3$ | $C_2H_5$ | $CH_3$ | H | V | 651 | 101 | 16 |
| 9 | II | Cl | $CH_3$ | $C_2H_5$ | H | H | EC | 635 | 100 | 13 |
| 10 | II | Cl | $CH_3$ | $C_2H_4OC_4H_9$ | $CH_3$ | H | V | 646 | 110 | 12 |

## Patentansprüche

1. Chinolinmethinfarbstoffe der Formel I

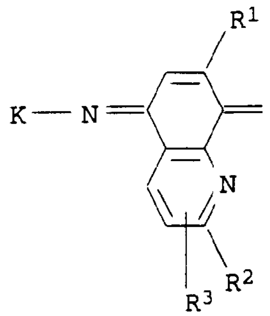

(I),

in der

$R^1$ Fluor, Chlor oder Brom,

$R^2$ Wasserstoff oder $C_1$-$C_4$-Alkyl,

$R^3$ Wasserstoff, Fluor, Chlor oder Brom und

K einen Rest der Formel

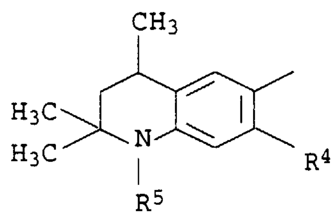

(II)

bedeuten, worin

$R^4$ für Wasserstoff, Methyl, Methoxy, $C_1$-$C_4$-Alkylsulfonylamino, $C_1$-$C_4$-Mono- oder Dialkylaminosulfonylamino oder den Rest -$NHCOR^6$ oder -$NHCO_2R^6$, wobei $R^6$ die Bedeutung von Phenyl, Benzyl, Tolyl oder $C_1$-$C_8$-Alkyl, das gegebenenfalls durch ein oder zwei Sauerstoffatome in Etherfunktion unterbrochen ist, besitzt, und

$R^5$ für Wasserstoff, $C_1$-$C_8$-Alkyl, das gegebenenfalls substituiert ist und durch ein oder zwei Sauerstoffatome in Etherfunktion unterbrochen sein kann, oder $C_5$-$C_7$-Cycloalkyl stehen.

2. Chinolinmethinfarbstoffe nach Anspruch 1, dadurch gekennzeichnet, daß

$R^1$ Chlor,

R2 Wasserstoff oder Methyl und

$R^3$ Wasserstoff bedeuten.

3. Verfahren zur Übertragung von Chinolinmethinfarbstoffen von einem Träger auf ein mit Kunststoff beschichtetes Papier durch Diffusion oder Sublimation mit Hilfe einer Energiequelle, dadurch gekennzeichnet, daß man einen Träger verwendet, auf dem sich ein oder mehrere Chinolinmethinfarbstoffe der Formel I gemäß Anspruch 1 befinden.

**Claims**

1. A quinolinemethine dye of the formula I

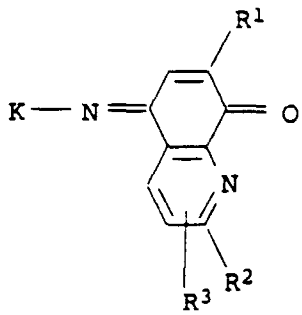

(I)

where

$R^1$ is fluorine, chlorine or bromine,
$R^2$ is hydrogen or $C_1$-$C_4$-alkyl,
$R^3$ is hydrogen, fluorine, chlorine or bromine, and
K is a radical of the formula

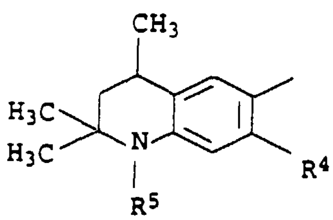

(II)

where

$R^4$ is hydrogen, methyl, methoxy, $C_1$-$C_4$-alkylsulfonylamino, $C_1$-$C_4$-mono- or -dialkylaminosulfonylamino or the radical $-NHCOR^6$ or $-NHCO_2R^6$, where $R^6$ is phenyl, benzyl, tolyl or $C_1$-$C_8$-alkyl which may be interrupted by one or two oxygen atoms in ether function, and
$R^5$ is hydrogen, $C_1$-$C_8$-alkyl which may be substituted and which may be interrupted by one or two oxygen atoms in ether function, or $C_5$-$C_7$-cycloalkyl.

2. A quinolinemethine dye as claimed in claim 1, wherein

$R^1$ is chlorine,
$R^2$ is hydrogen or methyl, and
$R^3$ is hydrogen.

3. A process for transferring quinolinemethine dyes from a transfer to a sheet of plastic-coated paper by diffusion or sublimation with the aid of an energy source, which comprises using a transfer comprising one or more quinolinemethine dyes of the formula I as set forth in claim 1.

**Revendications**

1. Colorants quinoléine-méthiniques de formule I

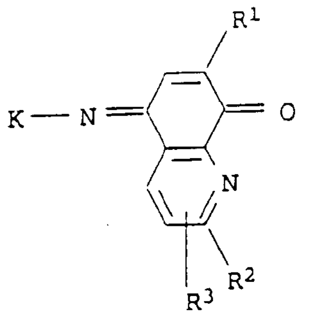

(I),

dans laquelle

$R^1$ représente un atome de fluor, de chlore ou de brome,
$R^2$ représente un atome d'hydrogène ou un reste alkyle en $C_1$-$C_4$,
$R^3$ représente un atome d'hydrogène, de fluor, de chlore ou de brome et
K représente un reste de formule

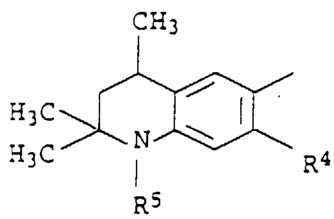

(II)

dans laquelle

$R^4$ est mis pour un atome d'hydrogène, pour un reste méthyle, méthoxy, (alkyl en $C_1$-$C_4$)sulfonylamino, mono- ou di(alkyl en $C_1$-$C_4$)aminosulfonylamino ou pour le reste -$NHCOR^6$ ou -$NHCO_2R^6$, $R^6$ représentant un groupement phényle, benzyle, tolyle ou alkyle en $C_1$-$C_8$ qui est éventuellement interrompu par un ou deux atomes d'oxygène en fonction éther,
$R^5$ est mis pour un atome d'hydrogène, pour un reste alkyle en $C_1$-$C_8$ qui est éventuellement substitué et peut être interrompu par un ou deux atomes d'oxygène en fonction éther ou pour un reste cycloalkyle en $C_5$-$C_7$.

**2.** Colorants quinoléine-méthiniques selon la revendication 1, caractérisés en ce que

$R^1$ représente un atome de chlore,
$R^2$ représente un atome d'hydrogène ou un reste méthyle et
$R^3$ représente un atome d'hydrogène.

**3.** Procédé de transfert de colorants quinoléine-méthiniques entre un support et un papier enduit de matière plastique, par diffusion ou sublimation au moyen d'une source d'énergie, caractérisé en ce que l'on utilise un support sur lequel se trouvent un ou plusieurs colorants quinoléine-méthiniques de formule I selon la revendication 1.